# EUROPEAN PATENT APPLICATION

(11) **EP 4 071 379 A1**
(43) Date of publication of application: **12.10.2022**
(21) Application number: 20897181.2
(22) Date of filing: 03.12.2020
(51) Int. Cl.: F16F 9/32, F16F 9/34

(54) **SHOCK ABSORBER**

(30) Priority: 06.12.2019 JP 2019221115
(71) Applicant: Hitachi Astemo, Ltd., Ibaraki 312-8503 (JP)
(72) Inventor: SHIBAHARA, Kazuaki, Hitachinaka-shi, Ibaraki 312-8503 (JP)
(74) Representative: Hoffmann Eitle
(86) International application number: PCT/JP2020/045050
(87) International publication number: WO 2021/112180

(57) **Abstract**

A valve chamber provided to a shock absorber according to a first embodiment includes an inner peripheral surface extending in a movement direction of a damping valve. The inner peripheral surface is provided with a plurality of discharge ports in communication with a discharge path. The plurality of discharge ports is disposed at positions point-symmetric with respect to a center of the inner peripheral surface. Due to this configuration, the shock absorber can prevent or reduce the generation of a pressure difference between some regions in the valve chamber, thereby preventing or reducing a self-induced oscillation of the damping valve as a result thereof.

## Description

### TECHNICAL FIELD

The present invention relates to a shock absorber that generates a damping force according to a movement of a piston rod.

### BACKGROUND ART

For example, a shock absorber discussed in PTL 1 is employed as a tube-type shock absorber employed in a suspension apparatus or the like of an automobile, a railway train, or the like. This shock absorber is configured in the following manner. That is, a rod guide is provided with a passage establishing communication between a cylinder chamber and a reservoir. The passage is provided with a valve chamber containing a damping valve therein. This valve chamber is in communication with the lower portion of the reservoir via discharge paths extending along the axial direction of a cylinder. This valve chamber includes a space generally circular in cross section, and a plurality of discharge ports in communication with these discharge paths is provided on the inner peripheral surface of this valve chamber, in particular, on the inner peripheral surface on the reservoir side thereof. In sum, these discharge ports are formed disproportionately concentratedly on the inner peripheral surface of the valve chamber on the reservoir side.

### CITATION LIST

### PATENT LITERATURE

PTL 1: Japanese Patent Application Public Disclosure No. 2015-48873

### SUMMARY OF INVENTION

### TECHNICAL PROBLEM

The shock absorber discussed in PTL 1 raises such concern that a pressure difference may be generated between the region on the reservoir side and the opposite region of the damping valve from the reservoir side in the valve chamber when hydraulic oil flows from the cylinder chamber into the reservoir via the valve chamber according to a movement of the piston rod because the plurality of discharge ports provided on the inner peripheral surface of the valve chamber is formed disproportionately concentratedly on the inner peripheral surface of the valve chamber on the reservoir side as described above. This may bring about a phenomenon that the damping valve tilts by being pressed due to this pressure difference (pressed from the high-pressure side to the low-pressure side), i.e., a self-induced oscillation. The self-induced oscillation of the damping valve may lead to generation of abnormal noise, wear, a breakage, and a defective waveform of a damping force (a defective damping characteristic) as a result thereof.

One of the objects of the present invention is to provide a shock absorber configured to effectively prevent or reduce a self-induced oscillation of a damping valve.

### SOLUTION TO PROBLEM

According to one aspect of the present invention, a shock absorber includes a cylinder sealingly containing hydraulic fluid therein, an outer tube disposed around an outer periphery of the cylinder, a reservoir formed between the cylinder and the outer tube and sealingly containing the hydraulic fluid and gas therein, a piston disposed slidably along an axial direction in the cylinder, a piston rod coupled with the piston and extending out of the cylinder, a passage configured to allow the hydraulic fluid to flow from the cylinder to the reservoir according to a movement of the piston rod, a damping valve provided in the passage and configured to function as a check valve by being opened due to a hydraulic pressure from the cylinder to permit a flow of this hydraulic fluid to the reservoir and also restricting a flow of the hydraulic fluid from the reservoir to the cylinder, a valve chamber provided in the passage and containing the damping valve therein, and a discharge path provided in the passage and configured to establish communication between the valve chamber and the reservoir. The valve chamber includes an inner peripheral surface extending in a movement direction of the damping valve. The inner peripheral surface is provided with a plurality of discharge ports in communication with the discharge path. The plurality of discharge ports is disposed at positions point-symmetric with respect to a center of the inner peripheral surface.

### ADVANTAGEOUS EFFECTS OF INVENTION

The shock absorber according to the one aspect of the present invention can effectively prevent or reduce the self-induced oscillation of the damping valve, thereby preventing or reducing the generation of abnormal noise, wear, a breakage, and a defective waveform of a damping force.

### BRIEF DESCRIPTION OF DRAWINGS

Fig. 1 is a cross-sectional view of a shock absorber according to a first embodiment of the present invention.
Fig. 2 is an enlarged view of a portion A illustrated in Fig. 1.
Fig. 3 is a cross-sectional view taken along a line B-B illustrated in Fig. 2.
Fig. 4 is a cross-sectional view taken along a line C-C illustrated in Fig. 3.
Fig. 5 is an enlarged cross-sectional view of main portions of a shock absorber according to a second embodiment of the present invention.
Fig. 6 is a cross-sectional view taken along a line D-D illustrated in Fig. 5.
Fig. 7 is an enlarged cross-sectional view of main portions of a shock absorber according to a third embodiment of the present invention.
Fig. 8 is a cross-sectional view taken along a line E-E illustrated in Fig. 7.
Fig. 9 is an enlarged cross-sectional view of main portions of a shock absorber according to another embodiment with respect to the shock absorber illustrated in Fig. 7.
Fig. 10 is an enlarged cross-sectional view of main portions of a shock absorber according to a fourth embodiment of the present invention.

### DESCRIPTION OF EMBODIMENTS

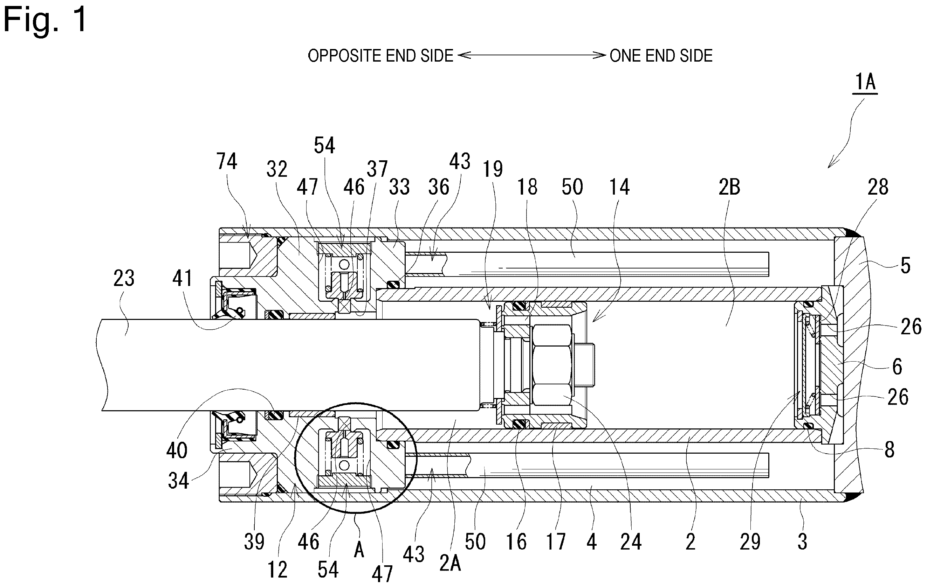

In the following description, shock absorbers 1A to 1D according to first to fourth embodiments of the present invention will be described in detail with reference to Figs. 1 to 10. The shock absorbers 1A to 1D according to these first to fourth embodiments are each a damper for damping an oscillating motion of a railway train, and are installed generally horizontally and laid sideways in use. In the following description, the first to fourth embodiments will be described referring to a portion located on the upper side and a portion located on the lower side with respect to a piston rod 23 in the installed state as an upper portion and a lower portion, respectively.

First, the shock absorber 1A according to the first embodiment will be described with reference to Figs. 1 to 4.

The shock absorber 1A according to the first embodiment includes a cylindrical outer tube 3 provided around the outer periphery of a cylinder 2 generally concentrically as illustrated in Fig. 1. An annular reservoir 4 is formed between these cylinder 2 and outer tube 3. In other words, the shock absorber 1A according to the first embodiment is formed into a double-tube structure. Openings of the cylinder 2 and the outer tube 3 on one ends thereof are closed by a one end-side plate 5 and a base member 6. More specifically, the base member 6 is fitted in the opening of the cylinder 2 on the one end liquid-tightly with the aid of a seal member 8. The one end-side plate 5 is welded to the one end of the outer tube 3, and the opening of the outer tube 3 on the one end is closed thereby. The base member 6 is disposed between this one end-side plate 5 and the one end of the cylinder 2. Openings of the cylinder 2 and the outer tube 3 on the opposite ends thereof are closed by a rod guide 12.

A piston 14 is disposed in the cylinder 2 slidably along the axial direction of the cylinder 2. As a result, the inside the cylinder 2 is divided into two chambers, cylinder chambers 2A and 2B by the piston 14. The cylinder chamber 2B is located on the one end side, and the cylinder chamber 2A is located on the opposite end side. A seal member 16 and a sleeve 17 are disposed between the outer peripheral surface of the piston 14 and the inner peripheral surface of the cylinder 2. A passage 18 is provided to the piston 14. The passage 18 establishes communication between the cylinder chamber 2A and the cylinder chamber 2B. A check valve 19 is provided on the piston 14. The check valve 19 permits only a flow of hydraulic oil from the cylinder chamber 2B side toward the cylinder chamber 2A side in the passage 18. One end portion of the piston rod 23 is coupled with the piston 14 with use of a nut 24.

The opposite end side of the piston rod 23 is slidably and liquid-tightly inserted through the rod guide 12 and extends out of it. The inside of the cylinder 2 is filled with the hydraulic oil serving as hydraulic fluid. The hydraulic oil serving as the hydraulic fluid and gas are sealingly contained in the reservoir 4. A plurality of passages 26 and 26 is formed on the base member 6 at circumferential intervals. The passages 26 and 26 establish communication between the cylinder chamber 2B and the reservoir 4. A valve chamber 28 in communication with the passages 26 and 26 is provided in a recessed manner on the opposite end surface of the base member 6. A check valve 29 is provided in this valve chamber 28. The check valve 29 permits only a flow of the hydraulic oil from the reservoir 4 side toward the cylinder chamber 2B side in the passages 26 and 26.

The rod guide 12 functions to slidably support the piston rod 23 protruding from the opposite end of the cylinder 2. The rod guide 12 is supported in the outer cylinder 3 on the opposite end side. The rod guide 12 is formed by integrally connecting a cylindrical guide main body portion 32, an annular fitted portion 33, and a cylindrical support portion 34. The fitted portion 33 is provided in a manner protruding from one end surface of this guide main body portion 32 toward the one end side generally concentrically, and is fitted in the reservoir 4. The support portion 34 is provided in a manner protruding from the opposite end surface of the guide main body portion 32 toward the opposite end side generally concentrically. An annular recessed portion 37 is formed on the inner peripheral surface of the guide main body portion 32 from the one end surface thereof toward the opposite end side. This annular recessed portion 37 is in communication with the cylinder chamber 2A. A seal member 36 is disposed between the inner peripheral surface of the fitted portion 33 and the outer peripheral surface of the opposite end of the cylinder 2. A sleeve 39 and seal members 40 and 41 are disposed between the inner peripheral surface of the rod guide 12 and the outer peripheral surface of the piston rod 23 from the annular recessed portion 37 provided on the inner peripheral surface of the guide main body portion 32 toward the opposite end side.

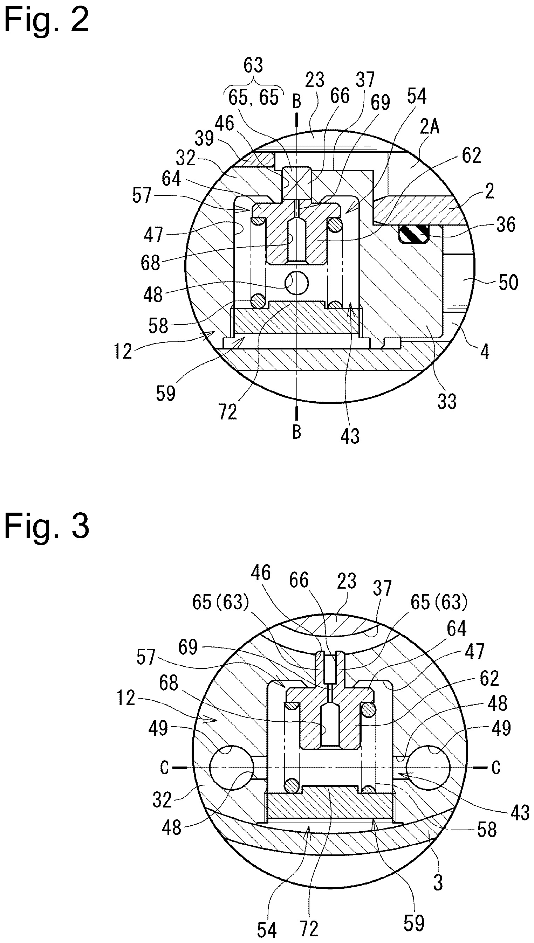

Passages 43 and 43 establishing communication between the cylinder chamber 2A and the reservoir 4 are provided to the guide main body portion 32 and the fitted portion 33 as illustrated in Fig. 1 and also referring to Figs. 2 to 4 as necessary. The plurality of passages 43 is formed at circumferential intervals in correspondence with valve chambers 47, which will be described below. In the present embodiment, the cylinder chamber 2A and the upper portion of the reservoir 4 are in communication with each other via the passage 43. Further, the cylinder chamber 2A and the lower portion of the reservoir 4 are in communication with each other via the passage 43. As illustrated in Figs. 2 to 4, each of the passages 43 includes an inflow path 46, the valve chamber 47, a plurality of discharge ports 48 and 48, discharge paths 49 and 49, and discharge pipes 50 and 50. The inflow path 46 is opened to the annular recessed portion 37 of the guide main body portion 32, and extends along the radial direction of the cylinder 2. This inflow path 46 is in communication with the valve chamber 47. The inflow path 46 is in communication with the valve chamber 47 via an orifice 69 of a valve member 57 at a stage prior to opening of a damping valve 54, which will be described below. The valve chamber 47 is provided in the guide main body portion 32. The valve chamber 47 is formed by a space portion generally circular in cross section that extends along the radial direction of the cylinder 2. The damping valve 54 is disposed in the valve chamber 47. The damping valve 54 functions as a check valve by being opened due to a hydraulic pressure from the cylinder chamber 2A to permit a flow of this hydraulic oil from the cylinder chamber 2A to the reservoir 4 and also restricting a flow of the hydraulic oil from the reservoir 4 to the cylinder chamber 2A.

As illustrated in Figs. 2 to 4, a poppet-valve type is employed for the damping valve 54. The damping valve 54 includes the valve member 57, a coil spring 58, and a spring support member 59. The valve member 57 is disposed movably in a direction along the radial direction of the cylinder 2 in the valve chamber 47. The coil spring 58 biases this valve member 57 to the inflow path 46 side. The spring support member 59 supports the end portion of this coil spring 58. The valve member 57 includes a valve main body portion 62, a guide portion 63, and an annular flange portion 64, which are generally concentric with one another. The valve main body portion 62 is formed into a columnar shape. The guide portion 63 is provided in a manner protruding from an axial end portion of this valve main body portion 62 along the axial direction, and is disposed in the inflow path 46. The annular flange portion 64 is provided in a manner protruding from the outer peripheral surface of the valve main body portion 62 radially outward. The valve member 57 is disposed generally concentrically with the inner peripheral surface of the valve chamber 47. The valve member 57 is disposed in the valve chamber 47 movably along the axial direction thereof. The guide portion 63 is formed into a columnar shape including a vertically extending slit 66. The guide portion 63 is formed so as to have a diameter smaller than the valve main body portion 62. The narrow slit 66, which vertically extends at a generally radially central portion, is formed at the guide portion 63. This means that the guide portion 63 is formed by a pair of guide pieces 65 and 65 generally semi-circular in cross section that is disposed while sandwiching the slit 66.

A flow hole 68 is formed so as to have a predetermined depth along the axial direction in the valve main body portion 62 of the damping valve 54 on the opposite surface thereof from the guide portion 63 side. The orifice 69 is formed in the valve main body portion 62 along the axial direction. The orifice 69 establishes communication between the flow hole 68 and the slit 66 of the guide portion 63. The annular flange portion 64 is provided in a manner protruding from a position near the boundary with the guide portion 63 on the outer peripheral surface of the valve main body portion 62 radially outward. The outer diameter of the annular flange portion 64 is smaller than the inner diameter of the valve chamber 47.

The valve chamber 47 is formed by being closed at the opening thereof on the outer cylinder 3 side by the spring support member 59. The spring support member 59 is formed into a disk-like shape. A disk-shaped support portion 72 is generally concentrically provided on the surface of the spring support member 59 that faces the valve chamber 47 in a manner protruding toward the valve member 57 side. This support portion 72 serves to support the coil spring 58 from the radially inner side. The outer diameter of the support portion 72 and the outer diameter of the valve main body portion 62 of the valve member 57 are approximately equal, and are slightly smaller than the inner diameter of the coil spring 58. Then, the guide portion 63 of the valve member 57 is disposed in the inflow path 46, and the coil spring 58 is disposed between the annular flange portion 64 of the valve member 57 and a portion of the spring support member 59 around the support portion 72. Due to this configuration, the valve member 57 is biased by the coil spring 58 in a direction for closing the inflow path 46.

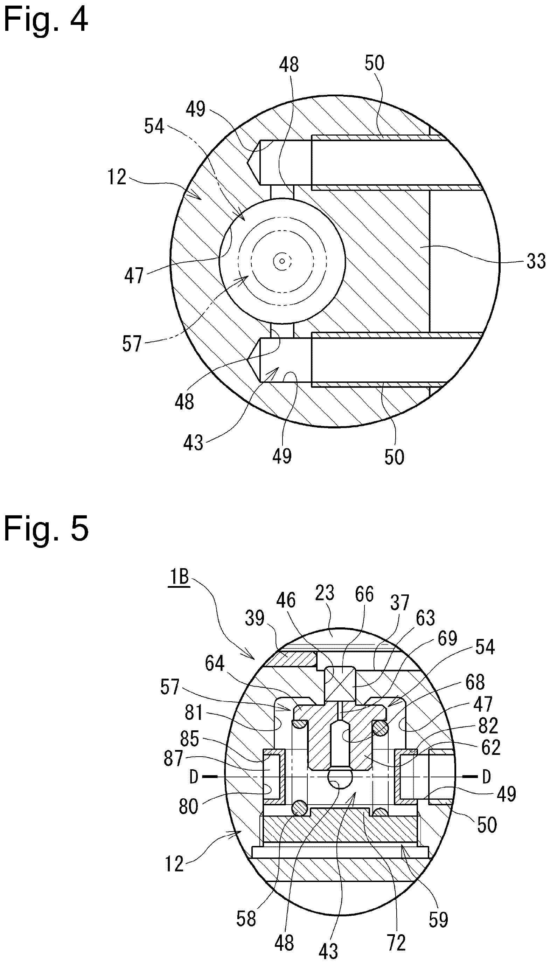

As illustrated in Figs. 2 and 4, the plurality of discharge ports 48 and 48 is disposed on the inner peripheral surface of the valve chamber 47 at intervals along the circumferential direction. Each of the discharge ports 48 and 48 extends along the radial direction of the valve chamber 47. Each of the discharge ports 48 and 48 is formed generally circularly in cross section. As illustrated in Fig. 4, the plurality of discharge ports 48 and 48 is formed on the inner peripheral surface of the valve chamber 47 at positions point-symmetric with respect to the radial center of this inner peripheral surface. In other words, the plurality of discharge ports 48 and 48 is formed on the inner peripheral surface of the valve chamber 47 at positions point-symmetric with respect to the radial center of the valve member 57. In other words, the plurality of discharge ports 48 and 48 is formed on the inner peripheral surface of the valve chamber 47 at positions on a straight line along the radial direction passing through the radial center of the valve chamber 47 (the valve member 57). In other words, the plurality of discharge ports 48 and 48 is formed on the inner peripheral surface of the valve chamber 47 at positions opposite from each other. The discharge ports 48 and 48 are formed as an even number of discharge ports. The opening area of each of the discharge ports 48 and 48 is approximately equal.

In the present embodiment, the discharge ports 48 and 48 are formed on the inner peripheral surface of the valve chamber 47 at two portions at a pitch of 180° along the circumferential direction. Referring to Fig. 3, the position of each of the discharge ports 48 and 48 along the axial direction of the valve chamber 47 is approximately the same. The position of each of the discharge ports 48 and 48 along the axial direction of the valve chamber 47 is not specified as long as it is naturally a position outside the range where the spring support member 59 is fixed. As illustrated in Fig. 4, these discharge ports 48 and 48 are in communication with the corresponding discharge paths 49 and 49, respectively. The discharge paths 49 and 49 are formed along the axial direction of the cylinder 2 in a range from the guide main body portion 32 of the rod guide 12 to the one end surface of the fitted portion 33. In the present embodiment, the discharge paths 49 and 49 are formed at two portions in correspondence with the discharge ports 48 and 48, respectively. The opposite end sides of the discharge pipes 50 and 50 are fitted in the rod guide 12 in communication with the discharge paths 49 and 49, respectively. Referring to Fig. 1, each of the discharge pipes 50 and 50 protrudes from the one end surface of the fitted portion 33 of the rod guide 12 into the reservoir 4 along the axial direction. One end of each of the discharge pipes 50 and 50 extends as far as a position just before the base member 6.

The valve chamber 47 is formed by the space portion generally circular in cross section that extends along the radial direction of the cylinder 2 and the plurality of discharge ports 48 and 48 is formed on the inner peripheral surface of the valve chamber 47 at the positions point-symmetric with respect to the radial center of this inner peripheral surface in the present embodiment, but the valve chamber 47 may be formed by a space portion polygonal in cross section and the plurality of discharge ports 48 and 48 may be formed on the inner peripheral surface of the valve chamber 47 at positions point-symmetric with respect to the center of this inner peripheral surface. In sum, the inner peripheral surface of the valve chamber 47 is not limited to the generally circular shape in planar view, and includes an elliptic shape, an elongated circular shape, a polygonal shape, and the like.

As illustrated in Fig. 1, an annular opposite end-side ring 74 is disposed around the support portion 34 of the rod guide 12. More specifically, the rod guide 12 can be supported between the opposite end-side ring 74 and the opposite end of the cylinder 2 in the opposite end portion of the outer tube 3 by placing this opposite end-side ring 74 in the annular recessed portion around the support portion 34 of the rod guide 12 and screwing it on the inner peripheral surface of the outer tube 3 on the opposite end.

Next, the function of the shock absorber 1A according to the first embodiment will be described.

During an extension stroke of the piston rod 23, due to a movement of the piston 14 in the cylinder 2, the check valve 19 of the piston 14 is closed, and the hydraulic oil in the cylinder chamber 2A is pressurized and flows into the reservoir 4 by passing through each of the passages 43 and 43 of the rod guide 12. Further, at this time, the check valve 29 of the base member 6 is opened, and the hydraulic oil is replenished from the reservoir 4 into the cylinder chamber 2B via the passages 26 and 26 by an amount corresponding to the exit of the piston rod 23 from inside the cylinder 2. On the other hand, during a compression stroke of the piston rod 23, due to a movement of the piston 14 in the cylinder 2, the check valve 19 of the piston 14 is opened and the check valve 29 of the base member 6 is closed, and the hydraulic oil flows from the cylinder chamber 2A into the reservoir 4 by passing through each of the passages 43 and 43 by an amount corresponding to the entry of the piston rod 23 into the cylinder 2.

As a result, during both the extension and compression strokes of the piston rod 23, a damping force is generated against the stroke of the piston rod 23 with the aid of flow resistance generated due to the damping valve 54 when the hydraulic oil flows from the cylinder chamber 2A into the reservoir 4 by passing through the passages 43 and 43. Before the damping valve 54 is opened (a piston speed low region), the damping force according to the orifice characteristic approximately proportional to the square of the piston speed is generated due to resistance when the hydraulic oil flows through the orifice 69 of the damping valve 54. On the other hand, after the damping valve 54 is opened (a piston speed high region), a damping force according to a valve characteristic approximately proportional to the piston speed is generated according to the opening degree of the damping valve 54.

In this manner, during both the extension and compression strokes of the piston rod 23, the hydraulic oil in the cylinder chamber 2A flows into the reservoir 4 by passing through each of the passages 43 and 43 according to the movement of the piston rod 23. Then, when the damping valve 54 in the valve chamber 47 is opened due to the hydraulic pressure in the cylinder chamber 2A and the hydraulic oil flows from inside the valve chamber 47 of the passage 43 into each of the discharge paths 49 and 49 via each of the discharge ports 48 and 48, because the discharge ports 48 and 48 are formed at the positions point-symmetric with respect to the radial center of the inner peripheral surface (the valve member 57) of the valve chamber 47, respectively, the generation of a pressure difference can be prevented or reduced between some regions in the valve chamber 47, and thus a self-induced oscillation of the damping valve 54 can be prevented or reduced.

As described above, in the shock absorber 1A according to the first embodiment, the discharge ports 48 and 48, which establish the communication between the valve chamber 47 and the discharge paths 49 and 49, are formed on the inner peripheral surface of the valve chamber 47 at the positions point-symmetric with respect to the radial center of this inner peripheral surface, respectively. Due to this configuration, the shock absorber 1A can prevent or reduce the generation of a pressure difference between some regions in the valve chamber 47, thereby preventing or reducing a self-induced oscillation of the damping valve 54 as a result thereof. Accordingly, the shock absorber 1A can prevent or reduce the occurrence of abnormal noise due to the oscillation. Further, the shock absorber 1A can prevent or reduce a functional failure due to, for example, a breakage of the damping valve 54. Further, the shock absorber 1A can prevent or reduce the disturbance of the damping characteristic due to the oscillation, thereby achieving the stabilization of the damping characteristic. Further, the shock absorber 1A can prevent or reduce uneven wear due to the oscillation, thereby delaying the progress of aging deterioration compared to the conventional technique.

Further, the shock absorber 1A according to the first embodiment is configured in such a manner that each of the discharge ports 48 and 48 has the approximately equal opening area, and therefore can further prevent or reduce the generation of a pressure difference between some regions in the valve chamber 47. Further, the shock absorber 1A according to the first embodiment is configured in such a manner that the discharge paths 49 and 49 are formed in correspondence with the discharge ports 48 and 48, respectively, and therefore can further prevent or reduce the generation of a pressure difference between some regions in the valve chamber 47. The above-described structure such as the layout of each of the discharge ports 48 and 48 in communication with the discharge paths 49 and 49 can also be applied to, for example, a valve chamber provided in the piston 14 or the base member 6, as long as the shock absorber includes a damping valve mechanism using a poppet valve. Further, the present structure can also be applied to a valve chamber containing a damping valve not including the orifice 69 of the valve member 57.

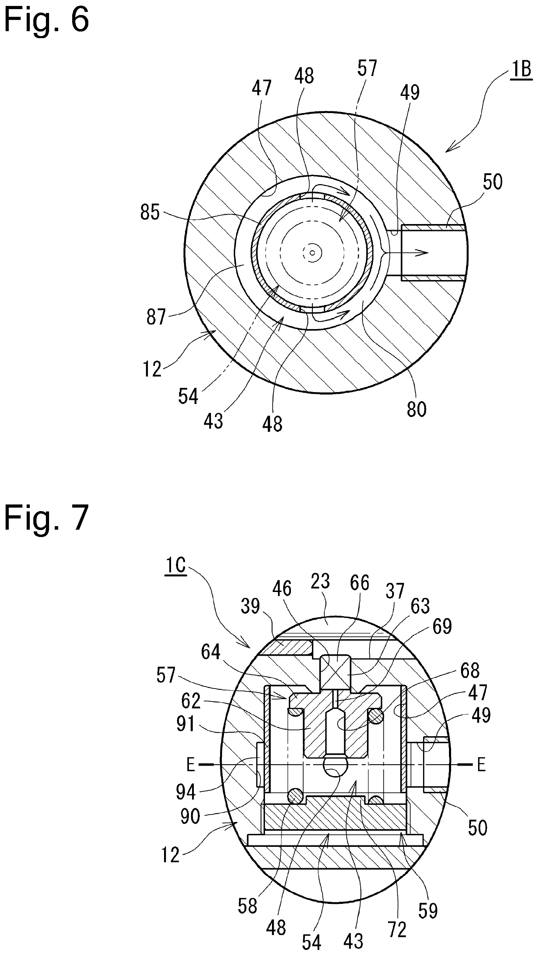

Next, the shock absorber 1B according to the second embodiment will be described with reference to Figs. 5 and 6. This shock absorber 1B according to the second embodiment will be described, mainly focusing on differences from the shock absorber 1A according to the first embodiment.

In the shock absorber 1B according to the second embodiment, the valve chamber 47 includes a large-diameter space portion 80 and a small-diameter space portion 81. The large-diameter space portion 80 is located on the outer tube 3 side, and has a generally circular shape in cross section that extends along the radial direction of the cylinder 2. The small-diameter space portion 81 is smaller in diameter than this large-diameter space portion 80, and has a generally circular shape in cross section that extends from this large-diameter space portion 80 toward the inflow path 46 continuously. The large-diameter space portion 80 and the small-diameter space portion 81 are formed generally concentrically with each other. An annular stepped portion 82 is formed between the large-diameter space portion 80 and the small-diameter space portion 81. The spring support member 59 is fixed at the end portion of the large-diameter space portion 80 on the outer tube 3 side. The discharge path 49 is opened on the inner peripheral surface of the large-diameter space portion 80. The discharge path 49 is formed at one portion in the present embodiment. This discharge path 49 is formed along the axial direction of the cylinder 2 in a range from the guide main body portion 32 of the rod guide 12 to the one end surface of the fitted portion 33. The discharge path 49 is in communication with the discharge pipe 50 fitted to the rod guide 12.

A discharge ring 85 is disposed generally concentrically with the inner peripheral surface of the large-diameter space portion 80 in abutment with the inner peripheral surface of the large-diameter space portion 80 and the annular stepped portion 82. The discharge ring 85 is formed into a generally squared U-like shape in cross section. More specifically, the discharge ring 85 is disposed generally concentrically with the inner peripheral surface of the valve chamber 47 in abutment with the inner peripheral surface of the large-diameter space portion 80 and the annular stepped portion 82 in such an orientation that the opening side thereof faces the inner peripheral surface of the large-diameter space portion 80. The plurality of discharge ports 48 and 48 is formed on the discharge ring 85. Each of the discharge ports 48 and 48 is formed generally circularly in cross section. The plurality of discharge ports 48 and 48 is formed at positions point-symmetric with respect to the radial center of the inner peripheral surface of the discharge ring 85. In other words, the plurality of discharge ports 48 and 48 is formed at positions point-symmetric with respect to the radial center of the inner peripheral surface of the valve chamber 47 (the large-diameter space portion 80 and the small-diameter space portion 81). In the present embodiment, each of the discharge ports 48 and 48 is formed at two portions at a pitch of 180° along the circumferential direction of the discharge ring 85.

An annular passage 87 is formed between the outer peripheral surface of the discharge ring 85 and the inner peripheral surface of the large-diameter space portion 80 of the valve chamber 47 due to the provision of the discharge ring 85 in the valve chamber 47 in the above-described manner. This annular passage 87 is in communication with the discharge path 49. Further, in the present embodiment, the discharge ring 85 is disposed in such a manner that a straight line connecting the pair of discharge ports 48 and 48 extends approximately perpendicularly to the discharge path 49. Then, in the shock absorber 1B according to the second embodiment, the passage 43 establishing the communication between the cylinder chamber 2A and the reservoir 4 includes the inflow path 46, the valve chamber 47, each of the discharge ports 48 and 48 of the discharge ring 85, the annular passage 87, the discharge path 49, and the discharge pipe 50.

Then, in the shock absorber 1B according to the second embodiment, when the hydraulic oil in the cylinder chamber 2A flows into the reservoir 4 by passing through the passages 43 according to the movement of the piston rod 23, the damping valve 54 in the valve chamber 47 is opened due to the hydraulic pressure in the cylinder chamber 2A and the hydraulic oil flows from inside the valve chamber 47 of the passage 43 into the reservoir 4 via the each of the discharge ports 48 and 48 of the discharge ring 85, the annular passage 87, the discharge path 49, and the discharge pump 50. At this time, because the discharge ports 48 and 48 of the discharge ring 85 are formed at the positions point-symmetric with respect to the radial center of the inner peripheral surface of the discharge ring 85 (the valve chamber 47), respectively, the shock absorber 1B can prevent or reduce the generation of a pressure difference between some regions in the valve chamber 47, thereby preventing or reducing a self-induced oscillation of the damping valve 54 as a result thereof.

Next, the shock absorber 1C according to the third embodiment will be described with reference to Figs. 7 to 9. This shock absorber 1C according to the third embodiment will be described, mainly focusing on differences from the shock absorber 1A according to the first embodiment.

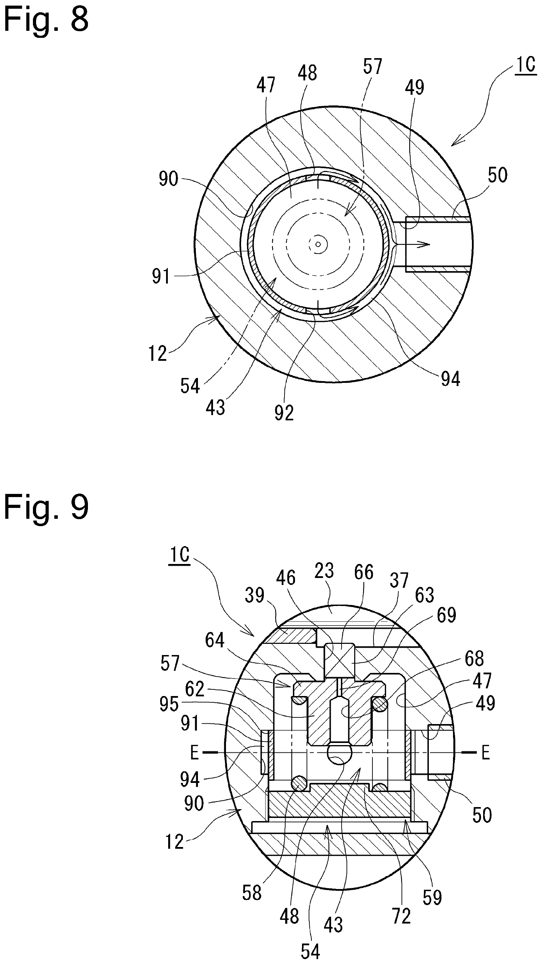

As illustrated in Figs. 7 and 8, in the shock absorber 1C according to the third embodiment, a circumferentially extending annular groove portion 90 generally rectangular in cross section is formed on the inner peripheral surface of the valve chamber 47. A C-shaped discharge ring 91 is disposed so as to close this annular groove portion 90 generally concentrically with the inner peripheral surface of the valve chamber 47. The discharge ring 91 is disposed with one axial end surface thereof in abutment with the bottom surface of the valve chamber 47, i.e., the surface of the valve chamber 47 opposite from the spring support member 59 side. The C-shaped discharge ring 91 includes a slit portion 92, and the discharge port 48 is formed at a position opposite from this slit portion 92. In other words, the slit portion (the discharge port) 92 and the discharge port 48 are formed at positions point-symmetric with respect to the radial center of the inner peripheral surface of the discharge ring 91, respectively. In other words, the slit portion (the discharge port) 92 and the discharge port 48 are formed at positions point-symmetric with respect to the radial center of the inner peripheral surface of the valve chamber 47, respectively. The discharge port 48 is formed generally circularly in cross section. Preferably, the opening area of the slit portion 92 and the opening area of the discharge port 48 are approximately equal.

When the discharge ring 91 is disposed generally concentrically with the inner peripheral surface of the valve chamber 47 so as to close the annular groove portion 90 provided on the inner peripheral surface of the valve chamber 47, an annular passage 94 is formed between the outer peripheral surface of the discharge ring 91 and the annular groove portion 90 provided on the inner peripheral surface of the valve chamber 47. This annular passage 94 is in communication with the discharge path 49. Further, in the present embodiment, the discharge ring 91 is disposed in such a manner that a straight line connecting the slit portion 92 and the discharge port 48 extends generally perpendicularly to the discharge path 49. Then, in the shock absorber 1C according to the third embodiment, the passage 43 establishing the communication between the cylinder chamber 2A and the reservoir 4 includes the inflow path 46, the valve chamber 47, the slit portion 92 and the discharge port 48 of the discharge ring 91, the annular passage 94, the discharge path 49, and the discharge pipe 50.

Then, in the shock absorber 1C according to the third embodiment, when the hydraulic oil in the cylinder chamber 2A flows into the reservoir 4 by passing through the passages 43 according to the movement of the piston rod 23, the damping valve 54 in the valve chamber 47 is opened due to the hydraulic pressure in the cylinder chamber 2A and the hydraulic oil flows from inside the valve chamber 47 of the passage 43 into the reservoir 4 via the slit portion 92 and the discharge port 48 of the discharge ring 91, the annular passage 94, the discharge path 49, and the discharge pump 50. At this time, because the slit portion 92 and the discharge port 48 of the discharge ring 91 are formed at the positions point-symmetric with respect to the radial center of the inner peripheral surface of the discharge ring 91 (the valve chamber 47), respectively, the shock absorber 1C can prevent or reduce the generation of a pressure difference between some regions in the valve chamber 47, thereby preventing or reducing a self-induced oscillation of the damping valve 54 as a result thereof. The shock absorber 1C according to the third embodiment includes the discharge port 48 formed by a generally circular hole, but may employ such a configuration that a groove portion is formed on one axial end surface or the opposite end of the discharge ring 91 as the discharge port 48. As illustrated in Fig. 9, the shock absorber 1C may be configured in the following manner. An annular stepped portion 95, which is formed by changing the inner diameter of the valve chamber 47, is provided continuously to the wall surface on the cylinder 2 side out of the opposing wall surfaces of the annular groove portion 90 on the inner peripheral surface of the valve chamber 47. Then, the annular groove portion 90 provided on the inner peripheral surface of the valve chamber 47 may be closed by disposing the one axial end surface of the discharge ring 91 in abutment with the annular stepped portion 95.

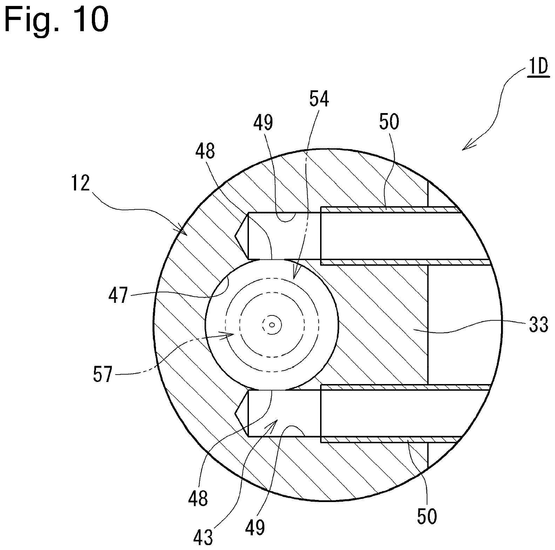

Next, the shock absorber 1D according to the fourth embodiment will be described with reference to Fig. 10. This shock absorber 1D according to the fourth embodiment will be described, mainly focusing on differences from the shock absorber 1A according to the first embodiment.

The shock absorber 1D according to the fourth embodiment is configured in such a manner that the plurality of discharge ports 48 and 48 provided on the inner peripheral surface of the valve chamber 47 does not extend along the radial direction of the valve chamber 47 unlike the shock absorber 1A according to the first embodiment, and each of the discharge ports 48 and 48 is formed by causing the valve chamber 47 and the end portion of each of the discharge paths 49 and 49 to interfere with each other and thus opening each of these interference portions. The position of each of the discharge ports 48 and 48 and the function and advantageous effects thereof are similar to the shock absorber 1A according to the first embodiment, and therefore the descriptions thereof will be omitted here.

The above-described embodiments have been described based on the example when the present invention is applied to a so-called uniflow-type shock absorber in which the hydraulic oil unidirectionally flows from the cylinder chamber 2A to the reservoir 4 via the passages 43 during both the extension stroke and the compression stroke of the piston rod 23, but the present invention can also be applied to another type of shock absorber in a similar manner as long as the valve chamber 47 containing the damping valve 54 is disposed on the way of the passage 43 establishing the communication between the cylinder 2 and the reservoir 4. Further, the present invention can also be applied to a shock absorber laid upright or obliquely in use without being limited to the shock absorber installed generally horizontally and laid sideways in use.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2019-221115 filed on December 6, 2019. The entire disclosure of Japanese Patent Application No. 2019-221115 filed on December 6, 2019 including the specification, the claims, the drawings, and the abstract is incorporated herein by reference in its entirety.

### REFERENCE SIGNS LIST

- 1A, 1B, 1C, 1D: shock absorber
- 2: cylinder
- 2A, 2B: cylinder chamber
- 3: outer tube
- 4: reservoir
- 14: piston
- 23: piston rod
- 43: passage
- 47: valve chamber
- 48: discharge port
- 49: discharge path
- 54: damping valve

## Claims

1. A shock absorber comprising:
a cylinder sealingly containing hydraulic fluid therein;
an outer tube disposed around an outer periphery of the cylinder;
a reservoir formed between the cylinder and the outer tube and sealingly containing the hydraulic fluid and gas therein;
a piston disposed slidably along an axial direction in the cylinder;
a piston rod coupled with the piston and extending out of the cylinder;
a passage configured to allow the hydraulic fluid to flow from the cylinder to the reservoir according to a movement of the piston rod;
a damping valve provided in the passage and configured to function as a check valve by being opened due to a hydraulic pressure from the cylinder to permit a flow of the hydraulic fluid to the reservoir and also restricting a flow of the hydraulic fluid from the reservoir to the cylinder;
a valve chamber provided in the passage and containing the damping valve therein; and
a discharge path provided in the passage and configured to establish communication between the valve chamber and the reservoir,
wherein the valve chamber includes an inner peripheral surface extending in a movement direction of the damping valve, the inner peripheral surface being provided with a plurality of discharge ports in communication with the discharge path, the plurality of discharge ports being disposed at positions point-symmetric with respect to a center of the inner peripheral surface.

2. The shock absorber according to claim 1, wherein an opening area of each of the discharge ports is approximately equal.

3. The shock absorber according to claim 1 or 2, wherein the discharge path includes a plurality of discharge paths provided in correspondence with the discharge ports.
